# EUROPEAN PATENT APPLICATION

(11) **EP 3 162 774 A1**
(43) Date of publication of application: **03.05.2017**
(21) Application number: 15196440.0
(22) Date of filing: 26.11.2015
(51) Int. Cl.: C03C 17/30, C08J 7/04, G06F 1/16, H04B 1/3888

(54) **SCREEN PROTECTOR AND MANUFACTURE METHOD THEREOF**

(30) Priority: 30.10.2015 CN 201510730704
(71) Applicant: KMP PrintTechnik AG, 84307 Eggenfelden (DE)
(72) Inventor: Mr. Ma Fei, Zhabei District, Shanghai (CN)
(74) Representative: Rothkopf, Ferdinand

(57) **Abstract**

The present application relates to the field of screen protective material. It provides a screen protector comprising: a laminate structure made of plastic or glass; an adhesive or a silicon oil coated on one side of the laminate structure; a plurality of projections of identical height arranged in a uniform array on the same side of the laminate structure as that having the projections. The present screen protector can prevent the appearance of Newton's Ring.

## Description

### Technical Field

The present application relates to the technical field of material, in particular, it relates to a screen protector and the preparation method thereof.

### Background

The protection film of electronic product has a very huge market. Consumers will typically buy and install such screen film after buying laptops or mobile phones and other electronic products. The purpose for sticking this film comprises: to prevent accidental scratch to display screen, to reduce harmful blue light emitted from the screen of laptops and mobile phones, to avoid the dazzling feel as a light irradiating onto the screen, anti-peeping and so on.

3M and Nippa company (Japan) have screen film products of high permeability, which use transparent PET film as substrate, and the film has UV light curing film as a functional coating layer on one side, and adhesive or silicon oil coated on the other side. Even after spending a lot of time on cleaning the laptop screen, a consumer will still be cautious when he/she sticks the side of protective film coated with adhesive or silicon oil onto the laptop screen. This is because, in addition to the issue of the area being too large to paste, for this process, the film easily absorbs airborne particles because it has static electricity, then the particles are sandwiched between the laptop screen and the film, as a result the adhesive layer or silicon oil layer cannot fully spread, forming bulge and air packet contacting impurities as the center, affecting the impression and proper use, so the consumer may have dissatisfaction.

Moshi iVisor's laptop sticking film uses the processing of excluding back adhesive in the display area, so the fast sticking can be realized. However, due to the plastic film and the laptop screen have two reflective surfaces that are extremely close to each other, the reflected lights will interfere with each other, accordingly light and dark stripes will appear, the display will be impacted. This kind of stripe is called Newton's Ring.

In order to solve the problem of Newton's ring, based on the following research "The Generation And Prevention Of Newton's Ring" of Yantie Yan ("Photo Industry" 38 (8) 105 (1980), this company employs a plastic film of rough to contact with the laptop screen, but the rough film has a low transmittance, it will impact the color and brightness of the display screen, and left rough dark strip, which also impairs the display.

In order to improve the manipulation convenience of screen sticking film for laptop or other electronic product, meanwhile to make sure the product have high light transmittance, eliminate the Newton's Ring raised between the double reflection surfaces, the existing plastic film and glass film needs further improvement.

### SUMMARY

The aim of the present application is to provide a display screen protector of high transparency and easy to stick, so as to overcome the issues raised in the screen protectors on the market such as the appearance of Newton's Ring, decreasing of display efficiency and the like.

According to an embodiment of the present application, a screen protector is provided, which comprises: a laminate structure made of plastic or glass; an adhesive or a silicon oil coated on at least a part of one side of the laminate structure; a plurality of projections of same height arranged in a uniform array on one side of the laminate structure, wherein the plurality of projections and the adhesive or silicon oil are on the same side of the laminate structure.

According to another embodiment of the present application, a method for manufacturing a screen protector is provided, wherein the projections are arranged onto the laminate structure by means of coating, transfer printing or printing.

The screen protector of the present invention has a uniform array of equal height miniature protrusions, accordingly the distance between the protective film (laminate structure) and the display screen remains stable, so as to avoid the appearance of Newton's Ring because there is no air-gap wedge formed between the protective film and display screen. On the other hand, the laminate structure has a high light transmittance, so the display will not be adversely affected.

The preparation method of screen protector according the present application provides a breakthrough for the existing technology of whole coating process on the surface of a film or a glass, the present method employs a process for forming a uniform array of miniature protrusions, and this way of single cylinder body adhesion can avoid the shortcomings of decreasing the light transmittance and increasing the haze for the process of entire surface coating.

### Brief Description of the Drawings

Figure 1 is a cross sectional view of a screen protector according to an embodiment of the present application.
Figure 2 is a front view of a screen protector according to an embodiment of the present application.
Figure 3 is a perspective view of a projection of the screen protector according to an embodiment of the present application.

### Detailed Description of the Invention

Objects, technical solution and beneficial advantages of the technology of the present application will be explained below in detail with reference to the accompanying drawings and examples. However, it should be appreciated that the following description of the embodiment(s) is merely exemplary in nature and is in no way intended to limit the application.

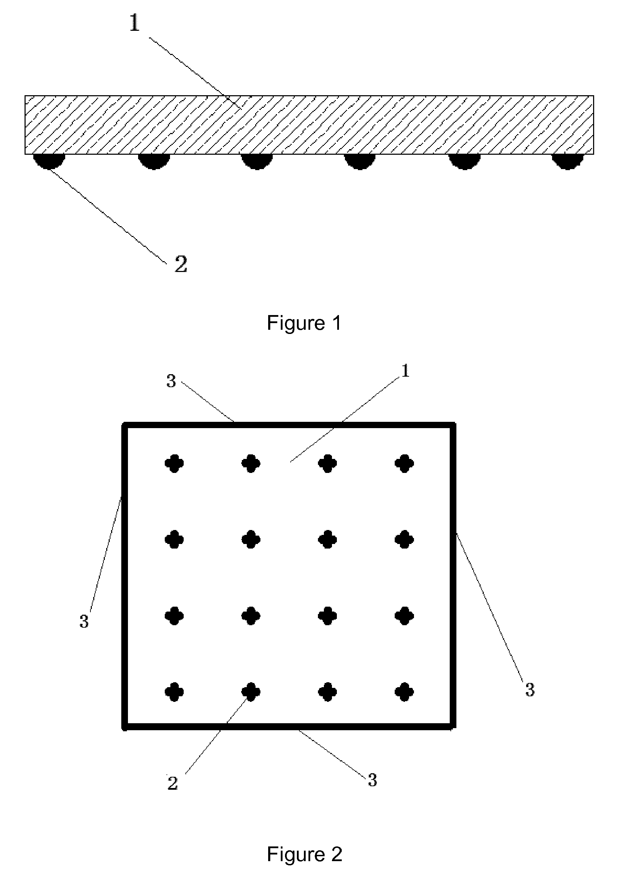

Referring to Figure 1, according to an embodiment of the application, a screen protector is provided, which comprises: a laminate structure 1 made of plastic or glass; an adhesive or a silicon oil coated on at least a part of one side of the laminate structure; a plurality of projections 2 of same height arranged in a uniform array on one side of the laminate structure, wherein the plurality of projections and the adhesive or silicon oil are on the same side of the laminate structure. In an embodiment, the adhesive or silicon oil may form a layer 3 as shown in Figure 2.

The display screens employed in the present application are divided into two types: LED (Light Emitting Diode) display screen and LCD (Liquid Crystal Display) screen, and the display screen includes, but not limited to, the display screen of any type of laptop (notebook PC), MP4 player, tablet PC (e.g. IPAD) or the like.

According to an embodiment of the present application, the laminate structure made of plastic or glass has a thickness of from 0.01 mm to 2 mm. The display screen protector has high light transmittance, so as to ensure at a maximum degree that the brightness and color of the notebook screen or smart phone screen will not be impacted. Preferably, the display screen protector has a light transmittance of above 90%. Further, both surfaces of the laminate structure have a low roughness, and be smooth as far as possible. On the other hand, the laminate structure has a certain degree of hardness, so as to let a user hold this display screen protector by one hand, and be capable of adjusting the position of this protector relative to the display screen while sticking this protector onto a screen (display screen of a smart phone or a notebook PC or the like) until they are completely fit to each other.

According to a preferable embodiment of the present application, the plastic for forming the above-said laminate structure can be PC (polycarbonate) or PET (polyethylene terephthalate) or the mixture thereof; and the glass for forming the above-said laminate structure may be borate glass or aluminosilicate glass or the mixture thereof.

According to an embodiment of the present application, the adhesive or silicon oil is preferably made of a material having low residual rate or no residual. In particular, the adhesive or silicon oil may be transparent or opaque. According to a preferable embodiment, the adhesive may be an acrylic resin adhesive, and the silicon oil may be polydimethylsiloxane. The adhesive or silicone oil can be arranged on an edge portion or all of the area of the laminate structure by coating, transfer printing or printing. The area to be treated with coating, transfer printing or printing can be determined depending on the screen situation of notebook PC or smart phone. For a display screen having a lower surface energy, the area to be coated can be increased; for the case of a screen, for example, made of glass or other material having high surface energy, the area to be coated may be decreased properly.

According to an embodiment of the present invention, for a display screen having no border or a narrow border (for example, the width of the border being less than 0.5 cm for a mobile phone screen, the width of the border being less than 1.2 cm for a Tablet PC screen), all the area of one side of the laminate structure should be applied with a transparent adhesive or silicon oil, in order to reduce the adverse impact on the display of the screen. The term "border" or "frame" herein refers to the structure outside the display screen which does not display such information as image and the like. On the other hand, for a display screen having a border width greater than or equal to 0.5 cm, the edge portion of the laminate structure corresponding to the said border can be applied with an opaque adhesive or silicon oil by coating, transfer printing or printing, with the proviso that the opaque adhesive or silicon will not cover the display area of the screen.

According to the technical solution of the present invention, a layer of transparent adhesive or silicon oil is applied onto the edge of the protector by means of sticking, coating, transferring or printing, as the area of the adhesive or silicon oil is relative small, it is easy to manipulate meanwhile the protector and the display screen of a laptop or the like can attach and fix to each other very well. On the other hand, the difference between the present protector and the existing protector on the market is: the transparent adhesive or silicon oil can ensure that there is no block to the light emitted from a screen of a laptop or mobile phone, so as to improve consumer satisfaction.

According to an embodiment of the present application, the projections arranged in a uniform array on one side surface of the laminate structure may have various shapes, and they can be solid or hollow miniature protrusions. Figure 1 is a cross sectional view of a laminate structure 1 with a plurality of projections 2. In this figure, the diagonal stripes refer to the body portion of the laminate structure, which can be made of plastic or glass, and the black bumps denote the projections located onto the laminate structure by molding, it can be seen that each of the projections may have a shape of cylinder.

Further, a uniform array means every two neighboring projections arranged in longitudinal direction or in lateral direction on the laminate structure have the same distance, alternatively, with respect to the arrangement of concentric circles, every two neighboring projections on the same circle have the same distance, and every two neighboring circles have the same distance in the radial direction. Figure 2 shows a display screen protector with a plurality of projections 2 in a uniform array according to an embodiment of the present application, wherein all of the projections 2 have the same shape, i.e. a shape of plum blossom in this embodiment, and the distance of every two neighboring plum blossom shaped cylinders in either horizontal direction or vertical direction is a certain value which is in the range of from 2 mm to 5 mm. These projections 2 are formed and cured onto the laminate structure with a transparent liquid of optical level, such as transparent light solidification resin, by means of transfer printing, the transparent liquid is crystallized after UV curing, and the hardness thereof is larger than or equal to 4H. Specifically, the height of each projection 2 is equal to or less than 0.2 mm, the maximum radial cross-section diameter is equal to or less than 0.2 mm. These projections 2 may be solid or hollow. The term "radial direction" or "radial" refers to a direction perpendicular to the height direction of the projection. Further, these projections may be different in the cross section size in radial direction, that is to say, these projections may have different parameter sizes except the height size.

According to an embodiment of the present application, the projection of the protector may have a shape of hemisphere or cylinder. When each of the projections has the shape of hemisphere, the maximum radius thereof may be 0.1 mm, that is to say, its diameter may be equal to or less than 0.2 mm. When each of the projections has the shape of cylinder, its cross section may be in the shape of square, rectangular, plum or raspberry shape.

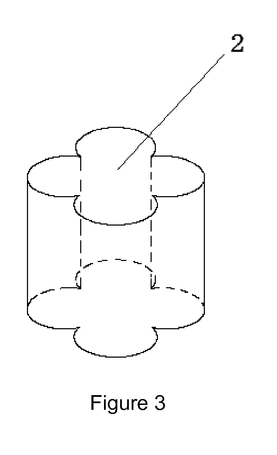

Figure 3 further shows the structure of one projection 2 contained in the display screen protector of the present application, the projection 2 is a circular cylinder with a cross section of plum blossom shape. Preferably, the maximum diameter of the plum blossom shape is 0.08 mm ± 0.01 mm, and the circular cylinder has a height of 0.1 mm.

The projection can be arranged onto the laminate structure by means of UV coating, template transfer printing, and silk screen printing, in particular, these projections are all located on the side surface contacting with the display screen. The laminate structure is further coated with the above said adhesive or silicon oil on the side of projection. By means of these projections, the light disturbance between the double reflection layers (display screen and the laminate structure of the display screen protector), i.e. Newton's Ring, can be avoided. Preferably, each of the projection has a height less than 0.2 mm, and a diameter less than 0.2 mm (this size is the minimum size that can be recognized by a naked eye). These projection sizes enable the projections not be perceived by a user, thus eliminating the adverse influence to the display.

On the other hand, each of the projections has a certain mechanical strength. As a consumer may often press the protective film (protector) when he/she uses the electronic device comprising the protector, it is necessary to let these projections play such a supporting role that they will not deform under a certain range of pressing force or even deformation occurs they will return to the original shape very soon, so as to avoid the appearance of Newton's Ring. The distance between two neighboring protrusions may be determined based on the hardness and thickness of the selected laminate material ( protective film), the specific value can be selected in such a way that there is no surface contact between the laminate material of the protector and the display screen, but only point exists between the projections and the display screen.

The preferable projection may include, but not limited to, transparent solid circular projection, transparent hollow circular projection, the transparent double concentric circular projection, raspberry-like solid projection, transparent double concentric circular raspberry-like projection, transparent plum blossom shaped projection and the like.

According to an embodiment of the present application, an array of transparent solid circular projections as single cylinders is employed, wherein the distances between every two neighboring single cylinders are the same. The distance between every two neighboring cylinders is 2 mm, and each cylinder has a height of 0.1 mm or less, and the max diameter of each single plum blossom shaped cylinder is 0.1 mm. The advantage for this arrangement of this shape of projections is: it is easy to produce and process.

According to another embodiment of the present application, an array of transparent hollow circular projections is employed, wherein the distances between every two neighboring cylinders are the same. The distance between every two neighboring cylinders is 3 mm, and each cylinder has a height of 0.1 mm or less, and the max diameter of each single cylinder is 0.2 mm. The advantage for this arrangement is: the lattice density is medium.

According to a further embodiment of the present application, an array of transparent double concentric circular projections is employed, wherein the distances between every two neighboring cylinders are the same. The distance between every two neighboring cylinders is 4 mm, and each cylinder has a height of 0.1 mm or less, and the max diameter of each single cylinder is 0.2 mm. The advantage for this arrangement is: the lattice density is small, the projection strength is high, not easy to deform under stress.

According to a further embodiment of the present invention, solid raspberry-like projections are employed. In this embodiment, two sizes of cylinders are used, they have the same height, but different size of radial cross section, and they are arranged in a concentric circular array of smaller cylinders surrounding larger cylinders, and the distances among the cylinders have an even distribution. The distance between every two neighboring raspberry shaped cylinders is 5 mm, and each raspberry shaped cylinder has a height of 0.1 mm or less, the maximum diameter of the larger cylinder is 0.2 mm, and the maximum diameter of the smaller cylinder is 0.08 mm. The advantage for this type of arrangement is: easy to manufacture, and the lattice density is small.

According to another embodiment of the present invention, the raspberry shaped hollow projections are employed, in this embodiment, two sizes of cylinders are used, wherein they have the same height, but different size of radial cross section, and they are arranged in a concentric circular array of smaller cylinders surrounding larger cylinders, and the distances among the cylinders have an even distribution. The distance between every two neighboring raspberry shaped cylinders is 5 mm, and each raspberry shaped cylinder has a height of 0.1 mm or less, the maximum diameter of the larger cylinder is 0.2 mm, and the maximum diameter of the smaller cylinder is 0.08 mm. The advantage for this type of arrangement is: the lattice density is small, the strength is high.

Compared with the prior art, the display screen protector of the present application has the advantages of easy to fit, decreasing the waste. It also prevents the appearance of Newton's Ring between double reflection surfaces, at the same time decreases the numbers and density of miniature projections to a maximum, increases the resistance to deformation of the projections, increases the life time of the product.

The embodiments above are merely the preferable embodiments of the present application and not intended to limit the present application. And all changes equivalent substitution and improvements which come within the meaning and range of equivalency of the present application are intended to be embraced therein.

## Claims

1. A screen protector comprising:
a laminate structure made of plastic or glass;
an adhesive or a silicon oil coated on at least a part of one side of the laminate structure;
a plurality of projections of identical height arranged in a uniform array on one side of the laminate structure, wherein the plurality of projections and the adhesive or silicon oil are on the same side of the laminate structure.

2. The screen protector of claim 1, wherein the laminate structure has a thickness of from 0.01 mm to 2 mm.

3. The screen protector of claim 1, wherein screen protector has a light transmittance of above 90%.

4. The screen protector of claim 1, wherein the distance of every two neighboring projections is in the range of from 2 mm to 5 mm.

5. The screen protector of claim 1, wherein the height of each of the plurality of projections is equal to or less than 0.2 mm, the maximum radial cross-section diameter is equal to or less than 0.2 mm.

6. The screen protector of claim 1, wherein each of the plurality of projections is solid or hollow.

7. The screen protector of claim 1, wherein the plurality of projections have different cross section sizes in radial direction.

8. A method for manufacturing the screen protector of claim 1, wherein the plurality of projections are arranged onto the laminate structure by means of coating, transfer printing or printing.
